# NEUE EUROPÄISCHE PATENTSCHRIFT

(11) **EP 1 454 058 B2**
(45) Veröffentlichungstag und Bekanntmachung des Hinweises auf die Entscheidung über den Einspruch: **24.11.2010**
(45) Hinweis auf die Patenterteilung: 20.06.2007
(21) Anmeldenummer: 02787673.9
(22) Anmeldetag: 14.11.2002
(51) Int. Cl.: F03D 11/00, G01P 21/02

(54) **VERFAHREN ZUR ÜBERWACHUNG EINES SENSORS**
METHOD FOR MONITORING A SENSOR
PROCEDE POUR SURVEILLER UN DETECTEUR

(30) Priorität: 27.11.2001 DE 10157759
(43) Veröffentlichungstag der Anmeldung: 08.09.2004
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2002/012721
(87) Internationale Veröffentlichungsnummer: WO 2003/046378

(56) Entgegenhaltungen:
- EP-A- 0 522 832
- WO-A-01/35109
- WO-A-02/057800
- US-A- 3 357 231
- US-A- 4 331 881
- US-A- 4 829 441
- US-B1- 6 205 376
- "European Wind Turbine Testing Procedure Developments", Riso Report no. 1209, published January 2001 & WO 01 35109 A1 17 Mai 2001
- "Condition Monitoring of Wind Farms using 10 Minutes Average Scada Data", V C Leaney et al., CREST, Loughborough University et al., European Wind Energy Conference 1997, pages 234-237, published October 1997 & EP 0 663 520 A1 19 Juli 1995
- "Nacelle Anemometry on a 1 MW Wind Turbine", Riso Report no. 941, published August 1997 & US 6 205 376 B1 20 März 2001

## Beschreibung

Die vorliegende Erfindung betrifft ein Verfahren zum Überwachen eines die Fließgeschwindigkeit eines Mediums erfassenden Sensors. Weiterhin betrifft die Erfindung eine Vorrichtung zur Ausführung dieses Verfahrens.

Es ist bereits aus JP 11072502 bekannt, dass in einem Verfahren fehlerhaft arbeitende Anemometer zu testen bzw. ihren fehlerhaften Betrieb festzustellen. Hierbei wird das Signal des Anemometers mittels eines Rechners ausgewertet und bei verschiedenen Windbedingungen werden die ausgewerteten Daten verglichen und hieraus kann ein Fehlersignal abgeleitet werden.

Aus JP 57-198870 ist ein Testgerät für Anemometer bekannt, bei welchem Anemometer unter Arbeitsbedingungen getestet werden. Aus US 4 331 881 ist bekannt, wie ein Anemometer bei einer Windenergieanlage eingesetzt werden kann, wobei das Signal des Anemometers zur Steuerung der Windenergieanlage verwendet wird.

Sensoren zur Überwachung von Fließgeschwindigkeiten von strömungsfähigen Medien sind seit langer Zeit bekannt. Bei Flüssigkeiten kommen Durchflussmengenmesser in vielen Variationen zur Anwendung. Bei gasförmigen Medien, zu denen auch die Luft zählt, kommen z.B. Anemometer in verschiedensten Bauformen zur Anwendung.

Diese Sensoren sind in situ häufig Umgebungsbedingungen ausgesetzt, die ihre sichere Funktionsfähigkeit beeinträchtigen können. Beispielsweise können auf Windenergieanlagen angeordnete Anemometer witterungsabhängig durchaus einer Vereisung unterliegen. Es ist leicht nachvollziehbar, dass ein solches vereistes Anemometer kaum noch einen korrekten Wert für die Strömungsgeschwindigkeit der Luft ermitteln und abgeben kann. Eine Redundanz führt hier zu keiner befriedigenden Lösung, da auch das redundant vorgesehene Anemometer natürlich der Vereisung unterworfen ist.

Das US 4,331,881 zeigt eine Vorrichtung, um das Verhältnis von Rotorblattspitzengeschwindigkeit und Windgeschwindigkeit an der Windenergieanlage konstant zu halten.

Das Dokument " The Wind Turbine Components and Operation", Bonus Info Newsletter, autumn 1999, Bonus Energy A/S, betrifft ein Steuerung einer Windenergieanlage. Es wird als Kontrollfunktion eines Anemometers beschrieben, dass die Steuerung die Windgeschwindigkeit im Bezug auf Leistung überwacht.

Aufgabe der vorliegenden Erfindung ist es daher, ein Verfahren und eine Vorrichtung der eingangs genannten Art derart weiterzubilden, dass eine Überwachung eines Sensors möglich ist, ohne redundante Sensoren vorzusehen.

Dies wird erreicht durch ein Verfahren nach Anspruch 1 bzw. eine Vorrichtung nach Anspruch 2. Dabei liegt der Erfindung die Erkenntnis zugrunde, dass eine solche Anlage nicht nur aufgrund der Daten dieses einen Sensors betrieben wird, sondern häufig der Betrieb von einer Vielzahl von Parametern abhängig ist. Dadurch stellt sich unabhängig von dem zu überwachenden Sensor, aber abhängig von den jeweiligen Strömungsbedingungen, ein bestimmter Betriebszustand ein. Korreliert man nun einen charakteristischen Betriebsparameter mit der von dem Sensor angegebenen Fließgeschwindigkeit, lässt sich aus dieser Korrelation eine Aussage darüber ableiten, ob diese Werte in einer plausiblen Beziehung zueinander sind - d.h., ob der Sensor einwandfrei arbeitet.

Die Daten von dem Sensor werden parallel oder aufeinanderfolgend mit mehreren Betriebsparametern korreliert. Eine parallele Korrelation der Daten erhöht die Zuverlässigkeit der Aussage über die Sensorfunktion. Andererseits kann es jedoch abhängig von dem Betriebszustand der Anlage sinnvoll sein, je nach Betriebsbedingungen zunächst einen ersten Betriebsparameter für die Korrelation zu verwenden, bei sich verändernden Betriebsbedingungen aber einen zweiten oder weitere Betriebsparameter für die Korrelation heranzuziehen, um zu einer möglichst zuverlässigen Bewertung zu gelangen.

In einer besonders bevorzugten Ausführungsform der Erfindung ist die Korrelationseinrichtung bereits in die Anlage integriert und kann so auf einfache Weise die zur Korrelation erforderlichen Betriebsparameter erfassen und einen entsprechenden Vergleich vornehmen.

Vorteilhafte Weiterbildungen der Erfindung sind in den Unteransprüchen angegeben.

Nachfolgend wird ein Ausführungsbeispiel der Erfindung anhand der Figuren näher beschrieben. Dabei zeigen:
- Figur 1: eine Windenergieanlage; und
- Figur 2: Kennlinien von Betriebsparametern der Windenergieanlage

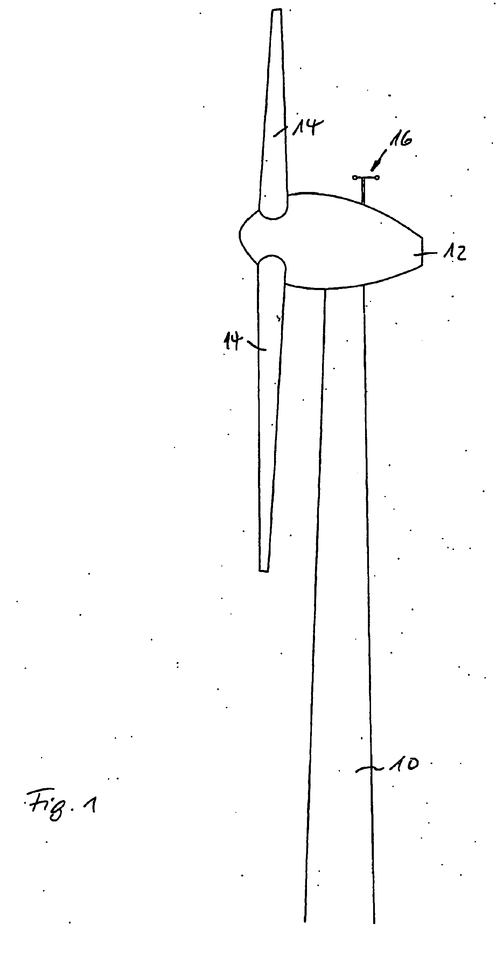

Figur 1 zeigt eine Windenergieanlage mit einem Turm 10, einer auf dem Turm 10 angeordneten Gondel 12 mit einem Rotor mit Rotorblättern 14, die einen in der Gondel angeordneten aber nicht dargestellten Generator antreiben, der abhängig von der Windgeschwindigkeit elektrische Energie erzeugt. Weiterhin ist auf der Gondel 12 ein Anemometer 16 vorgesehen, das die Windgeschwindigkeit erfasst.

Da es insbesondere im Winter bei entsprechenden Witterungsverhältnissen durchaus zu einer Vereisung des Anemometers 16 und damit zu Fehlanzeigen der Windgeschwindigkeit kommen kann, wird das Anemometer 16 überwacht, indem die von der Windgeschwindigkeit abhängige erzeugte Leistung der Windenergieanlage mit der Anzeige des Anemometers 16 korreliert wird. Ist die erzeugte Leistung der Windenergieanlage höher, als diese entsprechend der vom Anemometer 16, ermittelten Windgeschwindigkeit zu erwarten wäre, lässt sich daraus ableiten, dass das Anemometer 16 nicht einwandfrei funktioniert, da die erzeugte Leistung schließlich nicht erzeugt werden könnte, wenn die Windgeschwindigkeit dafür nicht ausreichen würde.

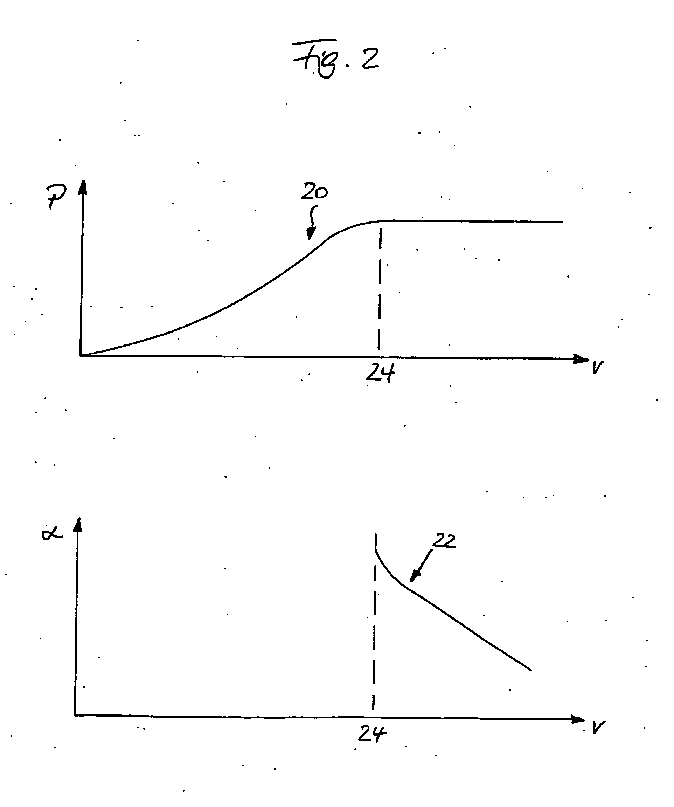

In Figur 2 ist dieser Zusammenhang anhand von Kennlinien nochmals dargestellt. Die Kennlinie 20 stellt den Verlauf der von der Windenergieanlage erzeugten Leistung in Abhängigkeit von der Windgeschwindigkeit dar. Die Abszisse ist daher mit "V" für die Windgeschwindigkeit gekennzeichnet, die Ordinate mit "P" für die Leistung. Wie aus der Kennlinie erkennbar ist, steigt mit zunehmender Windgeschwindigkeit die Leistung an, bis an einem mit 24 markierten Punkt auf der Abszisse die Nenn-Windgeschwindigkeit erreicht ist. Ab hier erzeugt die Windenergieanlage die Nennleistung. Somit lässt sich zumindest für den Bereich vom Ursprung der Kennlinie bis zu diesem Umschaltpunkt 24 die Windgeschwindigkeit mit der erzeugten Leistung korrelieren, um aus dieser Korrelation ableiten zu können, ob das Anemometer 16 einwandfrei funktioniert.

Nach Erreichen der Nenn-Windgeschwindigkeit gibt jedoch die Leistungskennlinie 20 keinen brauchbaren Anhalt mehr zur Korrelation mit der vom Anemometer angegebenen Windgeschwindigkeit. Anstelle der Leistungskennlinie kann jetzt jedoch die Blattwinkelkennlinie 22 herangezogen werden. Ab Erreichen der Nenn-Windgeschwindigkeit und bei weiter zunehmender Windgeschwindigkeit wird nämlich der Anstellwinkel der Rotorblätter verändert. Dies ist in der unteren Kennlinie dargestellt; hier ist die Abszisse wiederum mit "V" für die Windgeschwindigkeit und die Ordinate mit "a" für den Anstellwinkel der Rotorblätter markiert. Aus der Kennlinie ist zu entnehmen, dass der Anstellwinkel mit zunehmender Windgeschwindigkeit kleiner wird. Somit lässt sich nach Überschreiten des Umschaltpunktes 24 anhand des Anstellwinkels "a" der Rotorblätter bestimmen, ob das Anemometer 16 weiterhin die richtige Windgeschwindigkeit angibt.

Natürlich ist es statt dieser vom Betriebsbereich der Windenergieanlage abhängenden, aufeinanderfolgenden Verwendung mehrerer Betriebsparameter auch möglich, diese Parameter gleichzeitig zu berücksichtigen. Solange also die Windgeschwindigkeit unterhalb der Nenn-Windgeschwindigkeit ist, wird als Betriebsparameter die von der Anlage erzeugte elektrische Leistung verwendet und gleichzeitig wird der Anstellwinkel der Rotorblätter 14 abgefragt. Nach Überschreiten des Umschaltpunktes 24 und somit der Nenn-Windgeschwindigkeit wird nun der Anstellwinkel der Rotorblätter 14 verwendet und gleichzeitig wird die von der Anlage erzeugte Leistung berücksichtigt.

Dieses erfindungsgemäße Verfahren und die Vorrichtung sind natürlich nicht nur bei Windenergieanlagen anwendbar. Bei Wasserkraftwerken kann die Menge des durchströmenden Wassers mit der erzeugten elektrischen Leistung korreliert werden.

Selbst bei Verbrennungsmaschinen sind diese Verfahren und diese Vorrichtung anwendbar, um z.B. den Kraftstoff-Zulauf zu überwachen. Hier kann die Durchflussmenge des Kraftstoffes mit der erzeugten (mechanischen) Leistung korreliert werden.

## Patentansprüche

1. Verfahren zum Überwachen eines eine Windgeschwindigkeit erfassenden Sensors, wobei
die von dem Sensor (16) angegebene Windgeschwindigkeit mit wenigstens einem Betriebsparameter einer von dem Medium angetriebenen , Windenergieanlage (10, 12, 14) verglichen wird, und wobei gleichzeitig oder aufeinanderfolgend mehrere Betriebsparameter zum Vergleich mit den Sensordaten verwendet werden, **dadurch gekennzeichnet, dass** für Windgeschwindigkeiten unterhalb einer Nennwindgeschwindigkeit als Betriebsparameter die von der Windenergieanlage erzeugte Leistung verwendet wird und oberhalb der Nennwindgeschwindigkeit als Betriebsparameter ein Anstellwinkel von Rotorblättern der Windenergieanlage verwendet wird.

2. Vorrichtung zur Ausführung des Verfahrens nach Anspruch 1, wobei
ein die Windgeschwindigkeit erfassender Sensor (16), eine von dem Medium angetrieben Windenergieanlage (10, 12, 14) und eine Vergleichseinrichtung zum Vergleichen der von dem Sensor (16) angegebenen Windgeschwindigkeit und wenigstens einem Betriebsparameter der Windenergieanlage (10, 12, 14) vorgesehen ist.

3. Vorrichtung nach Anspruch 2,
**gekennzeichnet durch** eine in die Windenergieanlage (10, 12, 14) integrierte Vergleichseinrichtung.

4. Vorrichtung nach Anspruch 2 oder 3,
**gekennzeichnet durch** einen an bzw. in der Windenergieanlage angeordneten Sensor (16).

5. Vorrichtung nach einem der Ansprüche 2 bis 4,
**gekennzeichnet durch** einen als Anemometer ausgebildeten Sensor (16).

## Claims

1. Method for monitoring a sensor detecting a wind speed, wherein the wind speed indicated by the sensor (16) is compared with at least one operating parameter of a wind power installation (10, 12, 14) driven by the medium and wherein a plurality of operating parameters are used simultaneously or successively for comparison with the sensor data, **characterised in that** for wind speeds below a rated speed the power generated by the wind power installation is used as the operating parameter and above the rated speed an angle of attack of rotor blades of the wind power installation is used as the operating parameter.

2. Apparatus for carrying out the method according to claim 1 wherein there is provided a sensor (16) detecting the wind speed, a wind power installation (10, 12, 14) driven by the medium, and a comparison device for comparing the wind speed indicated by the sensor (16) and at least one operating parameter of the wind power installation (10, 12, 14).

3. Apparatus according to claim 2 **characterised by** a comparison device which is integrated into the installation (10, 12, 14).

4. Apparatus according to claim 2 or claim 3 **characterised by** a sensor (16) arranged on or in the wind power installation.

5. Apparatus according to one of claims 2 to 4 **characterised by** a sensor (16) in the form of an anemometer.

## Revendications

1. Procédé destiné à contrôler un capteur détectant une vitesse du vent, sachant que la vitesse du vent, délivrée par le capteur (16), est comparée à au moins un paramètre de service d'une éolienne (10, 12, 14), actionnée par un milieu, et sachant qu'en même temps ou successivement sont utilisés plusieurs paramètres de service pour la comparaison avec les données du capteur, **caractérisé en ce que**, pour des vitesses de vent inférieures à une vitesse nominale de vent on utilise, comme paramètre de service, la puissance générée par l'éolienne et, lorsqu'elles sont supérieures à la vitesse nominale du vent, on utilise, comme paramètre de service, un angle d'incidence des pales du rotor de l'éolienne.

2. Dispositif destiné à la mise en oeuvre du procédé selon la revendication 1, dans lequel il est prévu un capteur (16) détectant la vitesse du vent, une éolienne (10, 12, 14) actionnée par un milieu, et un dispositif de comparaison destiné à comparer la vitesse du vent, délivrée par le capteur (16), avec au moins un paramètre de service de l'éolienne (10, 12, 14).

3. Dispositif selon la revendication 2, **caractérisé par** un dispositif de comparaison intégré dans l'éolienne (10, 12, 14).

4. Dispositif selon la revendication 2 ou 3, **caractérisé par** un capteur (16) disposé sur et/ou dans l'éolienne.

5. Dispositif selon l'une quelconque des revendications 2 à 4,
**caractérisé par** un capteur (16) de type anémomètre.
